(19) **Europäisches Patentamt**

**European Patent Office**

**Office européen des brevets**

(11) **EP 0 725 289 B1**

(12) **EUROPEAN PATENT SPECIFICATION**

(45) Date of publication and mention
of the grant of the patent:
**02.05.2003 Bulletin 2003/18**

(51) Int Cl.$^7$: **G02B 6/38**, G02B 6/28,
G02B 6/34

(21) Application number: **96101042.8**

(22) Date of filing: **25.01.1996**

(54) **Optical coupler using ferrules with four polarization maintaining optical fibres**

Optischer Koppler mit Steckerstiften mit je vier polarisationserhaltenden optischen Fasern

Coupleur optique utilisant embouts de connecteur avec quatre fibres optiques à maintien de polarisation

(84) Designated Contracting States:
**CH DE FR GB LI**

(30) Priority: **31.01.1995 JP 3612395**

(43) Date of publication of application:
**07.08.1996 Bulletin 1996/32**

(73) Proprietor: **SEIKOH GIKEN Co., Ltd.**
**Matsudo-shi, Chiba-ken (JP)**

(72) Inventor: **Takahashi, Mitsuo**
**Matsudo-shi, Chiba-ken (JP)**

(74) Representative:
**Zenz, Joachim Klaus, Dipl.-Ing. et al**
**Zenz, Helber, Hosbach & Partner,**
**Patentanwälte,**
**Huyssenallee 58-64**
**45128 Essen (DE)**

(56) References cited:
**EP-A- 0 413 844** **GB-A- 2 218 222**
**US-A- 4 213 677**

- **PATENT ABSTRACTS OF JAPAN vol. 018, no. 627 (P-1834), 29 November 1994 & JP-A-06 242346 (SUMITOMO ELECTRIC IND LTD), 2 September 1994,**
- **PATENT ABSTRACTS OF JAPAN vol. 008, no. 208 (P-302), 21 September 1984 & JP-A-59 093417 (NIPPON DENSHIN DENWA KOSHA), 29 May 1984,**

## Description

1. Field of the Invention

The present invention relates to an optical coupler according to the preamble of patent claim 1. The optical coupler is for use with polarization maintaining optical fibers and has been constructed using an optical fiber ferrule, so that the lightwave of a polarization maintaining optical fiber is split into a pair of polarization maintaining optical fibers at an arbitrary splitting ratio, or the lightwaves of a pair of polarization maintaining optical fibers are combined to a polarization maintaining optical fiber.

2. Description of the Related Art

The structure of an optical coupler composed of a graded index rod lenses in the prior art, an optical filter having a non-uniform spectral response, and wavelength division multiplexing means consisting of a reflection plane.

Fig. 7 shows in principle the structure of the bidirectional optical coupler using the above mentioned optical coupling structure.

Fig. 8 shows in principle the structure of the unidirectional optical splitter.

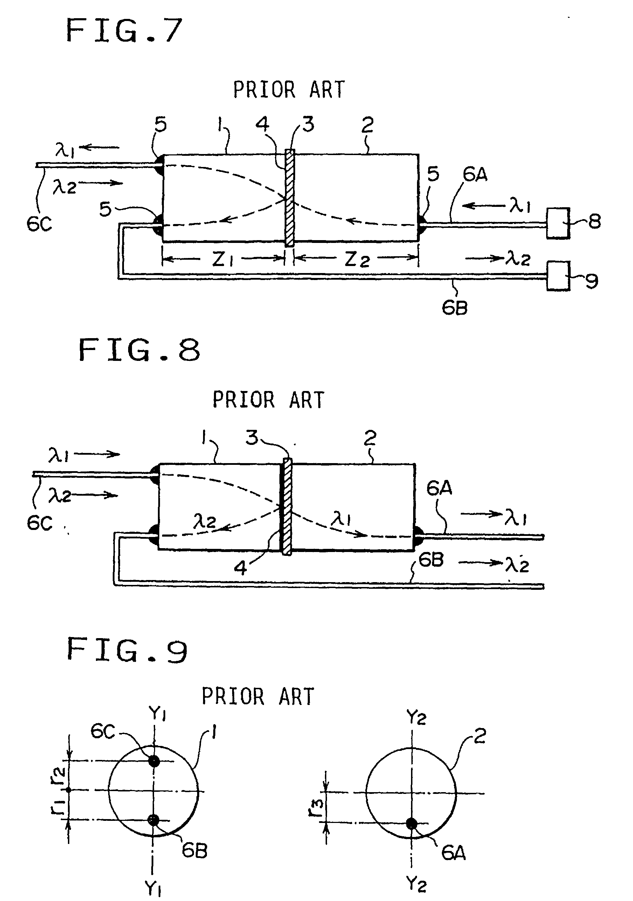

Since the optical coupler is commonly used for the structures of Figs. 7 and 8, the optical coupling structure will be described hereafter. Such an optical coupler for polarization maintaining optical fibers is e.g. known from Patent Abstracts of Japan, Vol. 8, No. 208(P-302) and JP-A-59 093 417 as well as US-A-4 213 677.

The graded index rod lenses 1, 2 have the same axial length ( $Z_1 = Z_2 = 0.25$ pitch ). These graded index rod lenses are available on the market as Selfoc® lenses of Nihon Ita Glass Co., Ltd.

Dielectric material layers are deposited on the surface of the glass plate 3 so that the reflection and transmission coefficients have different spectral responses. The glass plate 3 transmits part of the lightwave at the first wavelength $\lambda_1$ and reflects other part of the lightwave at the second wavelength $\lambda_2$.

The optical fibers 6A through 6C are connected to the outer surfaces of the graded index rod lenses 1, 2 as shown in FIG. 9. The end-faces of the optical fibers 6A through 6C are accurately fastened by the epoxy resin 5 to the graded index rod lens on the line Y-Y' passing through the optical axis thereof in the same distance ($r_1 = r_2 = r_3$) from the optical axis thereof.

The lightwave power generated at a first wavelength of $\lambda_1$ from a laser diode light source 8 is incident on the bidirectional optical coupler of FIG. 7. The lightwave is input to an optical fiber 6A from the light source 8.

The end-face of an optical fiber 6B is connected to an optical receiver 9 which consists of a photodiode.

The lightwave at a second wavelength of $\lambda_2$ is transmitted through an optical fiber 6C, reflected from the wavelength division multiplexing means 4, and incident on the optical fiber 6B passing back through the graded index rod lens 1 in the opposite direction.

The lightwave at the first wavelength $\lambda_1$, which is fed from the laser diode light source 8 through the graded index rod lens 2, is transmitted to the optical fiber 6C through the wavelength division multiplexing means 3 and graded index rod lens 1 in sequence.

The operation of the unidirectional optical multiplexer/demultiplexer will be described hereafter referring to FIG. 8. As described heretofore, the optical coupler has the same structure as the bidirectional optical coupler.

The combined lightwaves at wavelengths of $\lambda_1$ and $\lambda_2$ are incident on the graded index rod lens 1 after passing through the optical fiber 6C. The second lightwave power at a wavelength of $\lambda_2$ is reflected from the wavelength division multiplexing means 4. The first lightwave power at a wavelength of $\lambda_1$ is incident on the graded index rod lens 2 after passing through the wavelength division multiplexing means 4 and then goes to the optical fiber 6A. The second lightwave power at a wavelength of $\lambda_2$, which is reflected from the wavelength division multiplexing means 4, goes back to the optical fiber 6B passing back through the graded index rod lens 1. This process is also reversible. If the lightwave at a wavelength of $\lambda_1$ is fed to the optical fiber 6A when the lightwave at a wavelength of $\lambda_2$ is fed to the optical fiber 6B, the combined lightwaves at wavelengths of $\lambda_1$ and $\lambda_2$ can be obtained from the optical fiber 6C.

There is a well known optical coupler fabricated by fusing and drawing a pair of attached optical fiber portions, which differs from that fabricated using a pair of graded index rod lenses. For instance, an optical coupler of the fusion and drawn type is disclosed in the United Kingdom patent application number GB2239719A. An optical coupler fabricated based on the Evanescent effect is produced and sold by Fujikura Co., Ltd. (See polarization maintaining optical fiber series No. 90073000D.)

The optical coupler of the fusion and drawn type has an isolation of 15dB between a pair of wavelengths, and however an optical coupler of the graded index rod lens type has an isolation of 40dB or more.

The optical coupler of the graded index rod lens type has a certain optical power splitting ratio which is independent of the light power wavelength, and however the optical coupler of the fusion and drawn type has a wavelength dependent optical power splitting ratio.

Contrarily, the optical coupler of the graded index type has such defect that any alignment errors between the optical fiber 6B or 6C and the rod lens 1 and between the optical fiber 6A and the rod lens 2 cause large insertion losses when the optical fibers 6A through 6C are connected to the graded index rod lenses 1 and 2. The optical fibers 6A, 6B, and 6C are to be arranged

at $r_1$, $r_2$ and $r_3$ distant from the central optical axes of the graded index rod lenses 1 and 2, respectively. Distances $r_1$, $r_2$ and $r_3$ are to be aligned at the specified values plus (or minus) 1 to 2 $\mu m$ or less. Each of the optical fibers 6A, 6B and 6C is to be fastened to the respective rod lens 1 or 2 at the specified point of locations so that the optical fiber 6A, 6B or 6C is set at the point of location determined by line Y-Y' which passes through the central optical axis of the rod lens 1 or 2. If errors occur when the optical fibers 6A through 6C are fastened to the rod lenses 1 and 2, excessive optical power losses are generated in proportion with these errors.

The optical fibers 6A through 6C are to be fastened to the graded index rod lenses 1 and 2 by the epoxy resin so that no error may occur.

Since the fabrication requires a number of processes, a high degree of skill, and a great amount of expense, the price of the product is necessarily high. If a laser power source having a large optical power capability is used together with the optical coupler, the epoxy resin will be fatigued by the laser power during the operation over a long period of time.

Other problems of fabricating the optical coupler for use with polarization maintaining optical fibers are expected to arise from the use of graded index rod lenses of aforementioned structure. These are as follows.

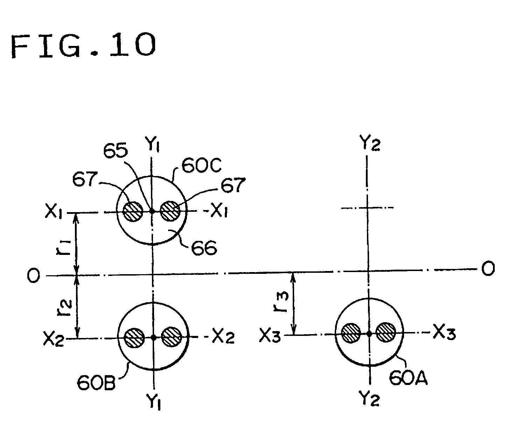

FIG. 10 shows the structure of an optical coupler wherein the polarization maintaining optical fibers 60A, 60B and 60C are used in place of the optical fibers 6A, 6B and 6C, respectively.

As described heretofore, each of the optical fibers 6A, 6B and 6C is to be fastened to the respective rod lens 1 or 2 at the specified point of location so that the optical fiber 6A, 6B or 6C is set at the point of location determined by line $Y_1$-$Y_1$ or $Y_2$-$Y_2$ which passes through the central optical axis of the rod lens 1 or 2.

The polarization maintaining optical fiber has a such cross-sectional structure which is different from the normal optical fiber that tension members 67 are symmetrically provided on both sides of the core 65 within the cladding layer 66 outside the core 65.

If any angular phase errors have occurred in an interface between the axes $Y_1$-$Y_1$ or $Y_2$-$Y_2$ and among the axes $X_1$-$X_1$, $X_2$-$X_2$, and $X_3$-$X_3$ when a pair of polarization maintaining optical fibers are connected together, the extinction ratio will be decreased since the polarization of the polarization maintaining optical fibers is lost.

The extinction ratio ER can be calculated by

$$ER(dB) = -10\log(\tan^2\theta)$$

where $\theta$: Angular phase errors (degrees) in the X-Y and X-X directions

An extinction ratio of 30 dB or more seems to be desired. For ER=30dB, $\theta \leq 1.8°$ is obtained.

If the ratio of the reflectance to the transmittance of the optical film 4 is specified as 50 to 50, the lightwave which has passed through the polarization maintaining optical fiber comes out to the polarization maintaining optical fibers 60A and 60B so that the optical power ratio of the polarization maintaining optical fiber 60A to the polarization maintaining optical fiber 60B is 50 to 50.

If the ratio of the reflectance to the transmittance of the optical fiber 4 is specified as 10 to 90, the optical power ratio of the polarization maintaining optical fiber 60A to the polarization maintaining optical fiber 60B is 10 to 90.

When lightwaves are concurrently input to the polarization maintaining optical fibers 60A and 60B, these lightwaves are combined together and come out to the polarization maintaining optical fiber 60C. This is the principle of operation of the optical multiplexer/demultiplexer consisting of a 1x2 circuit.

A mirror consisting of an optical film which reflects the lightwave at a wavelength of $\lambda_1$ and transmits the lightwave at a wavelength of $\lambda_2$ has a capability to operate as an optical coupler consisting of a 1x2 circuit.

The optical coupler for use with polarization maintaining optical fibers has a crosstalk of 40dB or more which can easily be obtained, while the optical coupler for use with normal optical fibers has a crosstalk of 15dB. Excessive optical losses which are caused by the mechanical accuracy of the assembly depend on the alignment of the polarization maintaining optical fibers 60A, 60B and 60C to the graded index rod lenses 1 and 2 when they are connected together.

The optical fibers 6A, 6B and 6C are, as shown in FIG. 10, to be arranged at $r_1$, $r_2$ and $r_3$ distant from the central optical axes of the graded index rod lenses 1 and 2, respectively. Distances $r_1$, $r_2$ and $r_3$ are to be aligned at specified values plus (or minus) 2$\mu m$ or less. Angular phase errors among the axes $X_1$-$X_1$, $X_2$-$X_2$ and $X_3$-$X_3$ along which tension is applied to the polarization maintaining optical fibers so as to keep the extinction ratio high are to be 1.8° or less by accurately aligning the polarization maintaining optical fibers to the graded index rod lenses. Since the fabrication requires a number of processes, a high degree of skill, and a great amount of expense, the price of the product is necessarily high.

Since the epoxy resin is used to connect the polarization maintaining optical fibers to the graded index rod lenses, the epoxy resin exposed to the high power laser beams which are transmitted through the interface between the polarization maintaining optical fibers and graded index rod lenses for a long period of time will be fatigued by the laser power during the operation.

U.S. Pat. No. 4,989,946 discloses optical fiber switches constructed using ferrules whose appearance resembles those of the present invention, which will be described hereafter together with the present invention.

GB 2 218 222 A describes a optical fiber switch using rotary ferrules which can secure any number of optical fibers in close tolerance. The optical fiber switch comprises a sleeve into which the pair of rotary ferrules are inserted from both ends. Switching is performed by angularly turning the ferrules.

Patent abstract of Japan, volume 18, No. 627 (1834) and JP-A-6 242 346 describe two ferrules which are inserted into a sleeve for optically coupling light from one polarization maintaining fiber to another polarization maintaining fiber. For alignment both ferrules and the sleeve have corresponding plane reference portions.

EP-A-0 413 844 discloses the provision of an angular reference portion on the outer surface of a ferrule flange.

The object of the present invention is to reduce the costs for aligning polarization maintaining optical fibers in an optical coupler of the graded index rod lens type with a high accuracy and reliably over a long time.

This object is solved by an optical coupler according to patent claim 1.

The optical coupler stably exhibits the satisfactory performance using four polarization maintaining optical fiber ferrules, which can be fabricated at low cost.

It is essential for the present invention that a four polarization maintaining optical fiber ferrule is fabricated wherein four polarization maintaining optical fiber elements are inserted into the central throughhole at the end-face thereof and fastened there, and wherein the relation between the diameter of the central throughhole at the end-face thereof and the diameter of these optical fiber elements is defined by the following formula:

$$d = (2^{1/2} + 1)d_1 + \delta$$

where

d: Diameter of the central throughhole at the end-face of the ferrule.

$d_1$: Diameter of the polarization maintaining optical fiber elements.

(uncoated optical fibers)

$\delta$: Allowance in $\mu$m.

First angular reference portions are provided on the outer cylindrical portion thereof, the polarization maintaining planes of at least one pair of polarization maintaining optical fiber elements arranged symmètrically with respect to said central axis are fastened at predetermined angle with respect to said reference portions.

In the four polarization maintaining optical fiber ferrule, the nominal value of the diameter (d) of the central throughhole of the ferrule is given by d=303$\mu$m, the nominal value of the diameter ($d_1$) of the polarization maintaining optical fiber element is given by $d_1$=125$\mu$m,

and the allowance $\delta$ is given by $\delta$<3$\mu$m.

In the four polarization maintaining optical fiber ferrule, the polarization maintaining planes of each pair of polarization maintaining optical fiber elements arranged symmetrically with respect to the central axis of the ferrule are fastened at predetermined angles with respect to the reference portions.

The optical coupler uses a pair of four polarization maintaining optical fiber ferrules and comprises a sleeve, a thin film which transmits part of an incident light while reflecting the remainder, a lens unit consisting of a pair of graded index rod lenses arranged within the sleeve so that the thin film is inserted between the pair of graded index rod lenses, and a selected pair of the ferrules which have been described heretofore, wherein the selected pair of ferrules are inserted into the sleeve from both ends thereof.

In the optical coupler using a pair of four polarization maintaining optical fiber ferrules, second reference portions are provided in the sleeve so as to mate with the first reference portions of the above ferrules.

In the optical coupler using a pair of four polarization maintaining optical fiber ferrules, the first reference portions of the ferrule are the reference portions made as outer flat planes, and the second reference portions of the sleeve are the reference portions made as inner flat planes which can mate with the outer flat planes.

In the optical coupler using a pair of four polarization maintaining optical fiber ferrules, the optical coupler(s) is(are) an optical coupler of 1x2 circuit type or a set of optical couplers of 1x2 circuit type.

In the optical coupler a pair of four polarization maintaining optical fiber ferrules, the thin film transmits the first wavelength component ($\lambda_1$) contained in the incident light, and reflects the second wavelength component ($\lambda_2$) contained therein.

In the optical coupler using a pair of four polarization maintaining optical fiber ferrules, the thin film which transmits part of the incident light while reflecting the remainder can be a multilayer dielectric film formed on a surface of the graded index rod lens.

BRIEF DESCRIPTION OF THE DRAWINGS

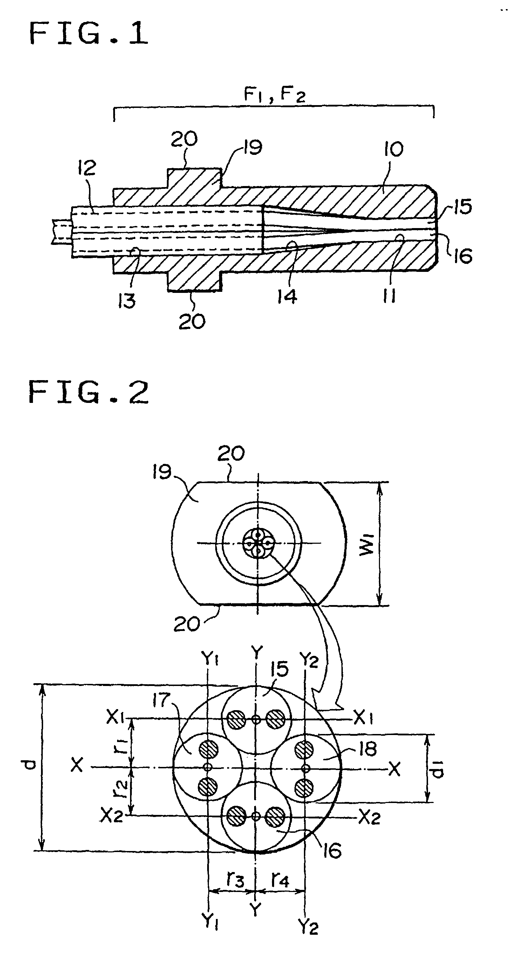

FIG. 1 shows a cross-sectional view of an embodiment of a four polarization maintaining optical fiber ferrule used in an embodiment of an optical coupler in accordance with the present invention.

FIG. 2 shows an end-face of the embodiment of the ferrule of FIG.1 wherein the central portion thereof is partly extended.

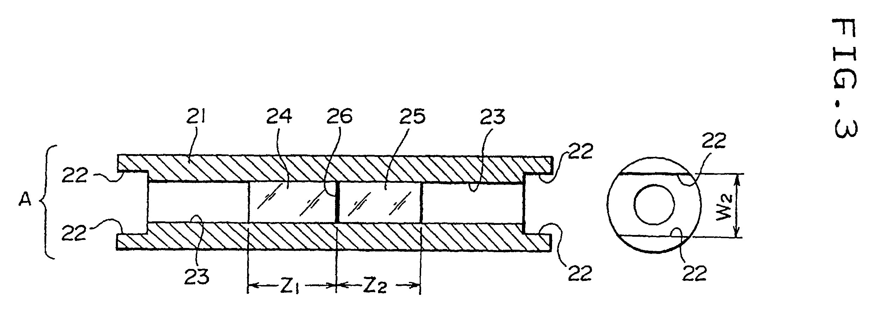

FIG. 3 shows a cross-sectional view of an embodiment of a lens unit for the optical coupler built in accordance with the present invention.

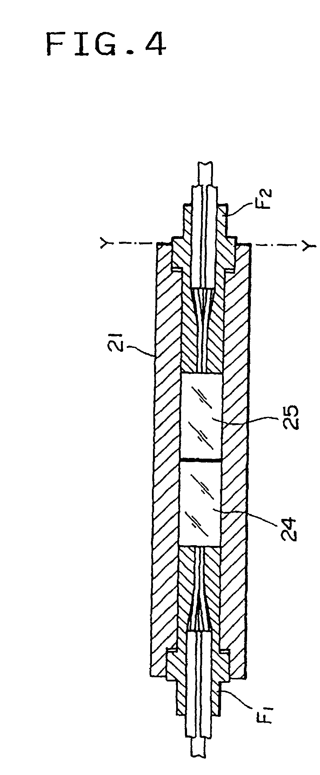

FIG. 4 shows a cross-sectional view of an embodiment of an optical coupler constructed using said lens unit combined with the ferrule.

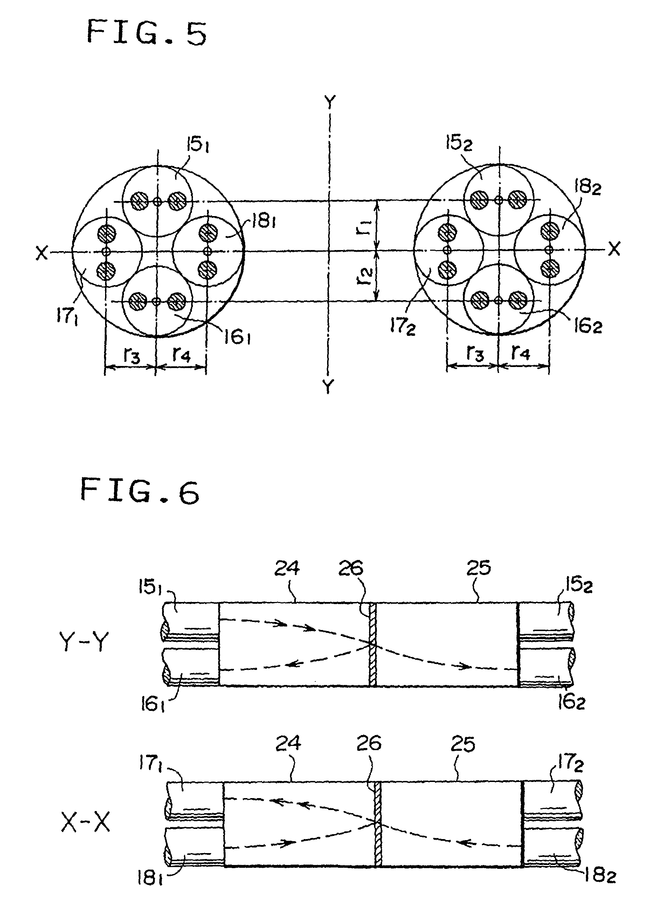

FIG. 5 shows an extended view of end-face, which are illustrated to explain the use of the optical coupler of FIG. 4 as two sets of 1x2 optical couplers.

FIG. 6 shows a cross-sectional view of a graded index rod lens and a thin film, which is illustrated to explain the use of the optical coupler of FIG. 4 as two sets of 1x2 optical couplers.

FIG. 7 shows in principle a cross-sectional view of a structure of a bidirectional optical coupler wherein a conventional graded index rod lens, a filter having a nonuniform spectral response, and a reflection surface are combined together.

FIG. 8 shows in principle a cross-sectional view of a structure of a unidirectional optical coupler wherein a conventional graded index rod lens, a filter having a nonuniform spectral response, and a reflection surface are combined together.

FIG. 9 shows cross-sectional views of the junctions between the graded index rod lenses and the optical fibers of both devices of FIGs. 7 and 8, respectively.

FIG. 10 shows cross-sectional views of polarization maintaining optical fibers, wherein the polarization maintaining optical fibers are used in place of normal optical fibers.

## DETAILED DESCRIPTION OF PREFERRED EMBODIMENT

The present invention will be described hereafter referring to the drawings.

FIG. 1 shows a cross-sectional view of an embodiment of a four polarization maintaining optical fiber ferrule for use in an optical coupler, which is built in accordance with the present invention. FIG. 2 shows an end-face of the embodiment of the ferrule wherein the central portion thereof is partly extended.

Ferrule 10 is a cylinder made of a sintered zirconia ceramic material, and it has an inner diameter d=303μm at the center of the end-face thereof. A throughhole 11 having a moderate length can accept four optical fiber end-faces 15, 16, 17 and 18 at the end-face of ferrule 10. A hole 13 is provided to accept 4 optical fibers and their coatings 12 at the base of ferrule 10. The throughhole 11 is connected to the hole 13 through a connecting hole having a tapered surface 14 with an inclination angle of 15 degrees or less.

A flange 19 is provided on the left side of the ferrule (FIG. 1). The reference 20 consisting of a flat plane on the outer surface of the ferrule has a width $W_1$ in the same distance from the center of the ferrule 10.

The polarization maintaining optical fiber elements 15, 16, 17 and 18 indicate the end-faces of the polarization maintaining optical fibers from which coatings 12 are removed, and each element has an outer diameter $d_1$ of 125μm ($d_1$ = 125μm).

The diameter d of the throughhole on the right side, which can be seen from the end-face of the ferrule 10, is expressed in terms of the diameter $d_1$ of the polarization maintaining optical fibers as:

$$d = (2^{1/2} + 1)d_1 + \delta$$

where

δ: Allowance for errors in the order of microns.

The allowance δ is 3μm or less (δ≤3μm) in the present embodiment. If the inner diameter d of the throughhole at the end-face of the ferrule is set at 303μm (d=303μm), the outer surfaces of the polarization maintaining optical fiber elements 15, 16, 17 and 18 are tightly contacted together. When the polarization maintaining optical fiber elements are inserted into the throughhole 11, the outer surfaces of the polarization maintaining optical fiber elements 15, 16, 17 and 18 can be contacted to the inner surface of the throughhole 11.

At this step, the following operations are required. The ferrule is to be installed in the positioning tool. The reference 20 consisting of a flat plane on the outer surface of the ferrule, which is located on the flange in parallel with the central axis of the ferrule, is to be set on the base line along the X-X axis of a microscope (not shown). The end-faces of four polarization maintaining optical fiber elements 15, 16, 17 and 18 are to be monitored on the microscope with a multiplication factor of 400 to 500. The polarization maintaining optical fibers are to be revolved until the $X_1$-$X_1$ and $X_2$-$X_2$ axes along which the tensile forces are applied to the polarization maintaining optical fibers 15, 16 accurately agree with the base line on the X-X axis of the microscope.

The polarization maintaining optical fibers are to be revolved in the same manner as above until the $Y_1$-$Y_1$ and $Y_2$-$Y_2$ axes along which the tensile forces are applied to the polarization maintaining optical fibers 17, 18 accurately agree with the base line on the Y-Y axis of the microscope. Thereafter, the end-faces of the polarization maintaining optical fibers are to be polished after the other end-faces of the polarization maintaining optical fibers are connected to the other fibers by the adhesive agent. A pair of four polarization maintaining optical fiber ferrules F1 and F2, which are used to construct an optical coupler for polarization maintaining optical fibers, can be built in this manner.

Assuming that the inner diameter d of the throughhole 11 at the end-face of the ferrule is 303μm (d=303μm), and that the outer diameter $d_1$ of the respective polarization maintaining optical fiber elements 125μm ($d_1$=125μm). The distances $r_1$, $r_2$, $r_3$ and $r_4$ from the central axis of the ferrule throughhole 11 to the polarization maintaining optical fiber elements 15, 16, 17 and 18 are calculated as 88.39 to 89.00μm. The distance of the optical axis of each polarization maintaining optical fiber element from the central axis of the throughhole 11 has an error of 0.3μm, which can be disregarded. The angle of the optical axis of an polarization maintaining optical fiber element from the optical axis of another polarization maintaining optical fiber element has an error of 0.004°, which causes no problem when the ferrule is put into practical use.

Consider a lens unit assembly A consisting of a pair of four polarization maintaining optical fiber ferrules F1 and F2 which are coupled together to construct an optical coupler.

FIG. 3 shows a cross-sectional view of an embodiment of a lens unit, together with a cross-sectional view of an end-face of the lens unit wherein a ferrule is inserted.

FIG. 4 shows a cross-sectional view of an embodiment of an optical coupler constructed using the lens unit combined with the ferrule.

A precise throughhole 23 is bored through a cylindrical sleeve 21 of the lens unit assembly as shown in FIG. 3.

A pair of first references are made of flat planes 22, 22 on the inner surface of the sleeve, consisting of a pair of parallel grooves having width $W_2$ at both ends of the cylindrical sleeve 21. A pair of second references are made of flat planes 20, 20 on the outer surface of the ferrule, consisting of a pair of parallel flanges of the four polarization maintaining optical fiber ferrules F1 and F2. A pair of first references 22, 22 at both ends of the cylindrical sleeve 21 mate with a pair of second references 20, 20 with a gap of 20μm or less.

A pair of graded index rod lenses 24, 25 are inserted into precise throughhole 23 bored at the center of the precise cylindrical sleeve 21 toward the central portion of the cylindrical sleeve 21. A thin film 26 which transmits part of the incident light and reflects the remainder is formed inbetween the pair of graded index rod lenses 24, 25 so that the lens unit assembly A is built using these components.

FIG. 4 shows a cross-sectional longitudinal view of an embodiment of an optical coupler constructed using a pair of four polarization maintaining optical fiber ferrules, which is built in accordance with the present invention.

The optical coupler of FIG. 4 is built by inserting a pair of four polarization maintaining optical fiber ferrules F1 and F2 into the precise throughhole 23 of the lens unit assembly A so that the reference portions 20 consisting of second flat planes mate with the reference portions 22 consisting of first flat planes on both sides of the lens unit assembly A, and that the end-faces of the lens unit assembly A contact the outer end-face of a pair of graded index rod lenses 24, 25.

Assume that the reference portions 20 consisting of second flat planes of the four polarization maintaining optical fiber ferrules F1 and F2 mate with the reference portions 22 of first flat planes at both end-faces of the sleeve assembly A combined with the lenses when the optical coupler is constructed using a pair of four polarization maintaining optical fiber ferrules F1 and F2 in accordance with the present invention. The locations of the respective polarization maintaining optical fibers in the direction of the radius in each ferrule, the angular phases among these fibers along the circumference of each ferrule, and the angular phases among the axes to which the tensile forces are applied can accurately be determined without any adjustment during the assembling of the optical coupler.

The operation of the optical coupler built in accordance with the present invention will be described hereafter referring to FIGS. 5 and 6.

FIG. 5 shows an extended view of end-faces of a pair of four polarization maintaining optical fiber ferrules F1 and F2, which is seen from the graded index rod lenses.

Polarization maintaining optical fibers $15_1$, $16_1$, $17_1$, $18_1$ are installed in the four polarization maintaining optical fiber ferrule F1. Polarization maintaining optical fibers $15_2$, $16_2$, $17_2$, $18_2$ are installed in the four polarization maintaining optical fiber ferrule F2.

FIG. 6 shows a cross-sectional view of the optical coupler. The optical coupler is longitudinally cut along the Y-Y axis of FIG. 2 at the top of FIG. 6, and along the X-X axis of FIG. 2 at the bottom of FIG. 6. If the ratio of the reflection coefficient to the transmittance for the thin film 26 is 50 to 50, 50% of the light power incident from the polarization maintaining optical fiber $15_1$ is reflected from the thin film 26, and then goes to the polarization maintaining optical fiber $16_1$.

The remaining 50% of the incident light power is transmitted through the thin film 26, and goes to the polarization maintaining optical fiber $16_2$. The optical coupler is thus operated as a 1x2 optical coupler having a light power splitting ratio of 50 to 50.

If the polarization maintaining optical fibers $18_1$, $18_2$ are connected to the light sources at the bottom of FIG. 6, the polarization maintaining optical fibers $17_1$, $18_1$, $18_2$ can be used for the 1x2 optical coupler.

The light power coming from the polarization maintaining optical fiber 18, goes out to the polarization maintaining optical fiber $17_1$, reflected from the thin film 26 because the polarization maintaining optical fiber $17_1$ is symmetrical with respect to the polarization maintaining optical fiber $18_1$. The light power coming from the polarization maintaining optical fiber $18_2$ goes out to the polarization maintaining optical fiber $17_1$, transmitted through the thin film 26 because the polarization maintaining optical fiber $17_1$ is symmetrical with respect to the polarization maintaining optical fiber $18_2$. This is the reason that the above circuit operates as a 1x2 optical coupler.

This embodiment of the optical coupler has a function of a pair of optical couplers of 1x2 circuit. The polarization maintaining optical fibers $15_2$, $17_2$ are used as dummy fibers for the alignment.

Assume that the thin film 26 transmits the first wavelength ($\lambda_1$) component of the incident light while reflecting the second wavelength ($\lambda_2$) component.

If the first wavelength ($\lambda_1$) component is fed to the optical fiber $18_2$ when the second wavelength ($\lambda_2$) component is fed to the optical fiber $18_1$, both the first

and second wavelength ($\lambda_1 + \lambda_2$) components appear at the optical fiber $17_1$ since the first wavelength ($\lambda_1$) component is combined with the second wavelength ($\lambda_2$) component on the optical fiber $17_1$.

As described heretofore, up to two optical couplers can be obtained using a pair of ferrules with 4 optical fibers and a set of lens unit.

The embodiment of FIG. 5 and 6 uses two optical fibers installed in ferrule F1 although ferrules F1 and F2, each of which uses four optical fibers, are used to build an optical coupler. A set of optical coupler can also be built using both two optical fibers installed in ferrule F2 and one optical fiber installed in ferrule F1.

Necessities are the installation of four optical fibers into a throughhole of a ferrule in the present invention.

Unused optical fibers are necessary for mechanically keeping the locations of optical fibers being used. The end-faces of the unused optical fibers are to be set opaque, if necessary.

U.S.Pat. No. 4,989,946 discloses a ferrule whose throughhole contains both two optical fiber endfaces and seven optical fiber end-faces. The diameter of the throughhole of the ferrule wherein two optical fiber end-faces have been inserted is twice that of the optical fiber.

Assume that the inner diameter of the ferrule is dw, the diameter of the optical fiber is $d_1$, and that the error between the diameter of the throughhole of the ferrule and the diameter of the optical fiber is $\delta w$. Then dw $= 2d_1 + \delta w$ holds for them. If $\delta w = 3\mu m$, the angular phase error between the pair of optical fibers is 12.5 degrees for a ferrule, and 25 degrees for a pair of ferrules. These ferrules can not be used in the present invention.

An angular phase error is 0.004 degree in the embodiments of the present invention.

Expression dw $= 3d_1 + \delta w$ is valid for the ferrule containing 7 optical fibers. The fabrication of the ferrule containing 7 optical fibers is difficult because 7 optical fibers can not easily be aligned.

As described heretofore, the optical coupler built in accordance with the present invention using a pair of four polarization maintaining optical fiber ferrules is fabricated using a pair of optical couplers of 1x2 circuit type which are built in a lens assembly A constructed using a pair of graded index rod lenses. Because of this type of simple construction, the optical coupler is small in size and light in weight. The optical coupler can be built in the same manner as the optical connector of conventional type, and no special skill is needed for fabricating the assembly.

The accuracy of aligning the optical axes between the respective polarization maintaining optical fibers and graded index rod lenses is specified as $2\mu m$ or less in the angular phase in the circular and radial directions. The excessive optical power loss can thus be reduced.

In addition, the axes of the polarization maintaining optical fibers installed in the ferrules, to which the tensile forces have been applied, can be aligned with respect to the reference plane of the ferrules before the assembly of an optical coupler is built. The sleeve combined with the lens assembly can be aligned using the reference planes without additional adjustment. The extinction ratio can thus be kept high.

This invention can drastically reduce the performance degradation of the optical coupler due to the fatigue of the adhesive agent, because it is unused on the surfaces of the optical fibers through which the lightwave is transmitted, even if a light power source having high output power is used.

Since a pair of optical couplers of 1x2 circuit type are built in a structure in accordance with the present invention, optical fiber gyros (i.e., optical fiber rotation sensors) or Mach-Zehnder interferometer sensors (i.e., optical fiber acoustic, electromagnetic field, and pressure sensors) can be built in small size.

## Claims

1. Optical coupler comprising a lens unit consisting of a pair of graded index rod lenses (24, 25), and an optical element which transmits part of an incident light while reflecting the remainder and is inserted between said pair of graded index rod lenses (24, 25)

    **characterized in that**
    the lens unit is arranged within a sleeve (21), the optical element is a thin film,

    and **in that** the coupler further comprises a pair of four polarisation maintaining optical fiber ferrules (F1, F2) one of which is inserted into each end, said sleeve (21),

    wherein each four polarization maintaining optical fiber ferrule (10) comprises:

    (a) a cylindrical body having an outer surface, a central axis, an end-face perpendicular to the central axis, and a throughhole (11) at the center of the end-face extending along the central axis, said throughhole (11) having a diameter at the end-face;

    (b) at least one first angular reference portion (20) on the outer surface of said cylindrical body;

    (c) four uncoated polarization maintaining optical fiber elements (15-18) fastened within said throughhole (11), each of the polarization maintaining optical fiber elements (15-18) having a polarization maintaining plane and a diameter which is related to the diameter of said throughhole (11) by the following formula:

$$d = (2^{1/2} + 1)\, d_1 + \delta$$

where

d: Diameter of the central throughhole at the end-face thereof,

$d_1$ = Diameter of the uncoated polarization maintaining optical fiber elements, and

$\delta$: Allowance for error in µm; and

(d) wherein the polarization maintaining planes of at least one pair of polarization maintaining optical fiber elements (15-18) arranged symmetrically with respect to said central axis are fastened at predetermined angle with respect to said angular reference portion (20).

2. Optical coupler as claimed in claim 1 wherein

the nominal value of the diameter (d) of the central throughhole of said four polarization maintaining optical fiber ferrule is given by d = 303 µm;

the nominal value of the diameter $(d_1)$ of said polarization maintaining optical fiber element is given by $d_1$ = 125 µm; and

the allowance ($\delta$) is given by $\delta \leq 3$µm.

3. Optical coupler as claimed in claim 1 wherein the polarization maintaining planes of each pair of polarization maintaining optical fiber elements (15-18) arranged symmetrically with respect to the central axis thereof are parallel and fastened at predetermined angles with respect to said reference portion (20).

4. Optical coupler as claimed in claim 1 or claim 3, wherein

second reference portions (22) are provided in said sleeve so as to mate with said first reference portions (20) of the ferrules.

5. Optical coupler as claimed in claim 4 wherein

said first reference portions (20) of said ferrule are the reference portions made as outer flat planes,

and

said second reference portions (22) of said sleeve are the reference portions made as inner flat planes which can mate with said outer flat planes (20).

6. Optical coupler as claimed in claim 4 wherein

said optical coupler(s) is (are) an optical coupler of 1x2 circuit type or a set of optical couplers of 1x2 circuit type.

7. Optical coupler as claimed in claim 1 wherein

said thin film (26) transmits the first wavelength component ($\lambda_1$) contained in the incident light, and reflects the second wavelength component ($\lambda_2$) contained therein.

8. Optical coupler as claimed in claim 1 wherein

said thin film (26) which transmits part of said incident light while reflecting the remainder is a multilayer dielectric film formed on a surface of said graded index rod lens (24, 25).

**Patentansprüche**

1. Optische Kopplungseinrichtung mit einer aus einem Paar von Graded-Index-Stablinsen (24, 25) bestehenden Linseneinheit und einem optischen Element, welches einen Teil des einfallenden Lichtes transmittiert, während der übrige Teil reflektiert wird, und das zwischen dem Paar der Graded-Index-Stablinsen (24, 25) eingebracht ist,

**dadurch gekennzeichnet,**

**daß** die Linseneinheit innerhalb einer Hülse (21) angeordnet ist,

**daß** das optische Element ein Dünnfilm ist, und

**daß** die Kopplungseinrichtung ein Paar von vierfach-polarisationserhaltenden Faseroptik-Ferrulen (F1, F2) aufweist, von denen jeweils eine in jedes Ende der Hülse (21) eingesteckt ist,

wobei jede vierfach-polarisationserhaltende Faseroptik-Ferrule (10) aufweist:

(a) einen zylindrischen Körper mit einer Außenfläche, einer Zentralachse, einer zu der Zentralachse senkrechten Stirnseite und eine Durchgangsöffnung (11) im Zentrum der Stirnseite, die sich entlang der zentralen Achse erstreckt,

wobei die Durchgangsöffnung (11) bei der Stirnseite einen Durchmesser aufweist;

(b) mindestens einen ersten winkligen Bezugsbereich (20) an der Außenfläche des zylindrischen Körpers;

(c) vier nicht-ummantelte, innerhalb der Durchgangsöffnung (11) befestigte polarisationserhaltende Faseroptik-Elemente (15 - 18), wobei jedes der polarisationserhaltenden faseroptischen Elemente (15 - 18) eine polarisationserhaltende Ebene und einen Durchmesser aufweist, der zu dem Durchmesser der Durchgangsöffnung (11) durch die folgende Formel in Beziehung steht:

$$d = (2^{1/2} + 1)\, d_1 + \delta$$

wobei

d: Durchmesser der zentralen Durch-

gangsöffnung an der Stirnseite

d$_1$ = Durchmesser des nicht-ummantelten polarisationserhaltenden faseroptischen Elements; und

δ: Fehlertoleranz in μm; und

(d) wobei zumindest die polarisationserhaltenden Ebenen eines Paares von polarisationserhaltenden Faseroptik-Elementen (15 - 18) bzgl. der Zentralachse symmetrisch angeordnet sind und bzgl. des winkligen Bezugsbereichs (20) in einem festgelegten Winkel befestigt sind.

2. Optische Kopplungseinrichtung gemäß Anspruch 1,

wobei

der Nominalwert des Durchmessers (d) der zentralen Durchgangsöffnung der vierfach-polarisationserhaltenden Faseroptik-Ferrule durch d = 303 μm gegeben ist;

der Nominalwert des Durchmessers (d$_1$) des polarisationserhaltenden Faseroptik-Elements durch den Wert d$_1$ = 125 μm gegeben ist; und

die Toleranz (δ) durch den Wert δ ≤ 3 μm gegeben ist.

3. Optische Kopplungseinrichtung gemäß Anspruch 1,

wobei die polarisationserhaltenden Ebenen jedes Paares von polarisationserhaltenden Faseroptik-Elementen (15 - 18) symmetrisch bzgl. der zentralen Achse parallel angeordnet sind und bezüglich des Bezugsbereichs (20) in festgelegten Winkeln befestigt sind.

4. Optische Kopplungseinrichtung gemäß Anspruch 1 oder Anspruch 3,

wobei

zweite Bezugsbereiche (22) in der Hülse zur Verfügung gestellt sind, die mit den ersten Bezugsbereichen (20) der Ferrulen in Eingriff stehen.

5. Optische Kopplungseinrichtung gemäß Anspruch 4,

wobei

die ersten Bezugsbereiche (20) der Ferrule solche Bezugsbereiche sind, die als äußere flache Ebenen ausgebildet sind, und

wobei die zweiten Bezugsbereiche (22) der Hülse solche Bezugsbereiche sind, die als innere flache Ebenen ausgebildet sind, die mit den äußeren flachen Ebenen (20) in Eingriff stehen können.

6. Optische Kopplungseinrichtung gemäß Anspruch 4,

wobei

die/der optische Kopplungseinrichtung(en) optische Kopplungseinrichtungen vom 1x2 Schaltungstyp oder ein Satz von optischen Kopplungseinrichtungen vom 1x2 Schaltungstyp ist (sind).

7. Optische Kopplungseinrichtung gemäß Anspruch 1,

wobei

der Dünnfilm (26) den in dem einfallenden Licht enthaltenen ersten Wellenlängenanteil ($\lambda_1$) transmittiert und den darin enthaltenen zweiten Wellenlängenanteil ($\lambda_2$) reflektiert.

8. Optische Kopplungseinrichtung gemäß Anspruch 1,

wobei

der einen Teil des einfallenden Lichtes transmittierende und den übrigen Teil reflektierende Dünnfilm (26) ein dielektrischer Mehrschichtfilm ist, der auf einer Oberfläche der Graded-Index-Stablinse (24, 25) gebildet ist.

## Revendications

1. Coupleur optique comprenant un système de lentilles constitué d'une paire de lentilles tiges à gradient d'indice (24, 25) et un élément optique qui transmet une partie d'une lumière incidente en en réfléchissant le reste et est inséré entre les lentilles tiges à gradient d'indice (24, 25),

**caractérisé par le fait que**

le système de lentilles est monté à l'intérieur d'un manchon (21),

l'élément optique est un film mince,

et que le coupleur comprend en outre une paire de ferrules (F1, F2) pour quatre fibres optiques maintenant une polarisation, dont une est engagée dans chaque extrémité du manchon (21),

dans lequel chaque ferrule (10) pour quatre fibres optiques maintenant une polarisation comprend :

(a) un corps cylindrique ayant une surface extérieure, un axe central, une face d'extrémité perpendiculaire à l'axe central et un trou traversant (11) au centre de la face d'extrémité s'étendant le long de l'axe central, ce trou traversant (11) ayant un certain diamètre à la face d'extrémité,

(b) au moins une première partie de référence angulaire (20) sur la surface extérieure du corps cylindrique,

(c) quatre éléments de fibres optiques non revêtus maintenant une polarisation (15 à 18) fixés à l'intérieur du trou traversant (11), chacun de ces éléments (15 à 18) ayant un plan de maintien de polarisation et un diamètre qui est lié au diamètre du trou traversant (11) par la formule suivante :

$$d = (2^{1/2} + 1)d_1 + \delta$$

où

d = diamètre du trou traversant central à la face d'extrémité du corps cylindrique,

$d_1$ = diamètre des éléments de fibres optiques non revêtus maintenant une polarisation et

$\delta$ = tolérance pour erreur en μm, et
(d) dans lequel les plans de maintien de polarisation d'au moins une paire d'éléments de fibres optiques maintenant une polarisation (15 à 18) disposés symétriquement par rapport à l'axe central sont fixés à un angle déterminé par rapport à la partie de référence angulaire (20).

2. Coupleur optique selon la revendication 1, dans lequel

la valeur nominale du diamètre (d) du trou traversant central de la ferrule pour quatre fibres optiques maintenant une polarisation est donnée par d = 303 μm,

la valeur nominale du diamètre ($d_1$) de l'élément de fibre optique maintenant une polarisation est donnée par $d_1$ = 125 μm, et

la tolérance ($\delta$) est donnée par $\delta \leq 3$ μm.

3. Coupleur optique selon la revendication 1,

dans lequel les plans de maintien de polarisation de chaque paire d'éléments de fibres optiques maintenant une polarisation (15 à 18) disposés symétriquement par rapport à l'axe central du corps cylindrique sont parallèles et fixés à des angles déterminés par rapport à la partie de référence (20).

4. Coupleur optique selon l'une des revendications 1 et 3, dans lequel

des deuxièmes parties de référence (22) sont prévues dans le manchon de façon à s'accoupler avec les premières parties de référence (20) des ferrules.

5. Coupleur optique selon la revendication 4, dans lequel

les premières parties de référence (20) de la ferrule sont les parties de référence faites de plans plats extérieurs, et

les deuxièmes parties de référence (22) du manchon sont les parties de référence faites de plans plats intérieurs qui peuvent s'accoupler avec les plans plats extérieurs (20).

6. Coupleur optique selon la revendication 4, dans lequel

le coupleur optique est ou les coupleurs optiques sont un coupleur optique de type de circuit 1x2 ou un ensemble de coupleurs optiques de type de circuit 1x2.

7. Coupleur optique selon la revendication 1, dans lequel

le film mince (26) transmet la première composante de longueur d'onde ($\lambda_1$) contenue dans la lumière incidente et réflêchit la deuxième composante de longueur d'onde ($\lambda_2$) contenue dans celle-ci.

8. Coupleur optique selon la revendication 1, dans lequel

le film mince (26) qui transmet une partie de la lumière incidente en réfléchissant le reste est un film diélectrique multicouche formé sur une surface de la lentille tige à gradient d'indice (24, 25).

# FIG.1

# FIG.2

# FIG.3

# FIG.4

FIG.5

FIG.6

# FIG.7

PRIOR ART

# FIG.8

PRIOR ART

# FIG.9

PRIOR ART

# FIG.10